(19) Europäisches Patentamt / European Patent Office / Office européen des brevets

(11) **EP 2 744 092 A1**

(12) **EUROPEAN PATENT APPLICATION**

(43) Date of publication:
**18.06.2014 Bulletin 2014/25**

(51) Int Cl.:
*H02M 3/07* [(2006.01)]     *G05F 1/563* [(2006.01)]
*G05F 1/63* [(2006.01)]     *H04B 1/16* [(2006.01)]

(21) Application number: **12290445.1**

(22) Date of filing: **17.12.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **NXP Semiconductors B.V.
5656 AG Eindhoven (NL)**

(72) Inventor: **Jean, Patrick
Redhill Surrey RH1 1NY (GB)**

(74) Representative: **Miles, John Richard et al
NXP B.V.
Intellectual Property & Licensing
Red Central
60 High Street
Redhill, Surrey RH1 1SH (GB)**

(54) **Energy efficient supply of transceiver by means of switched-capacitor assisted low dropout regulator**

(57)     Power amplifier circuitry has a linear voltage regulator to control the supply voltage to a power amplifier. A charge storage device is in series with a dissipative component, the series connection between a fixed supply terminal and a voltage supply terminal of the power amplifier. The required voltage drop is only partly implemented in a dissipative device and is partly implemented using a charge storage device. This enables charge re-use and thereby improves significantly the efficiency of the circuitry.

FIG. 1

EP 2 744 092 A1

## Description

This invention relates to the power control of a power amplifier, in particular using a linear regulator.

A common solution for controlling the output power of an RF power amplifier consists in adjusting its voltage supply.

The voltage supply can be adjusted by generating the voltage with a DC/DC converter. This approach is energy efficient but at the expense of some extra area and cost because of the filtering elements required to remove the spurious signals generated by the converter switching. Moreover this solution is only applicable if the bandwidth required for the power control is very limited, in particular much lower than the converter chopping frequency. This approach is thus rarely used for small transmitters.

A more common approach for the voltage adjustment in RF transmitter circuits is by using a so called "linear regulator" in which a series element creates a voltage drop between the voltage supply, such as a battery voltage, and the power amplifier supply node. This solution is compact, reliable and has virtually no limitations in term of bandwidth. It has also the very desirable property to be free of the generation of spurious signals.

It has nevertheless the drawback of wasting power in the series element (that is in general a PMOS transistor).

According to the invention, there is provided an apparatus and method as defined in the independent claims.

In one aspect, the invention provides power amplifier circuitry comprising:

a power amplifier;
a linear voltage regulator which includes a dissipative component for providing a voltage drop;
a charge storage device in series with the dissipative component, the series connection between a fixed voltage supply terminal and a voltage supply terminal of the power amplifier; and
a switching arrangement for connecting the charge storage device in a first circuit in series with the dissipative component during operation of the power amplifier and for coupling the charge storage device to a second circuit when the power amplifier is not operated.

The invention makes use of a linear voltage regulator for the control of a power amplifier. To overcome the problem of power inefficiency, the required voltage drop is only partly implemented in a dissipative device and is partly implemented using a charge storage device (such as a capacitor).

In the case of a burst mode device, a part of the energy can be recovered from one burst to another simply by using the stored charge. This use of the stored charge can be to feed the power amplifier itself or it can be used for another function in the overall circuitry. The switching between modes is synchronous with the RF bursts and thus does not create any spurious signals.

In a strict mode of operation with one single charge/discharge cycle per burst of a burst mode device, and when the output voltage is one half of the battery voltage, the efficiency of the regulator can be improved from 50% to 67%.

In one use of the circuitry of the invention, the circuitry comprises a transmitter unit controlled by the power amplifier and the second circuit comprises a receiver unit. To make the voltage stored on the charge storage device suitable for use by the receiver unit, the second circuit can comprise a voltage conversion circuit. The second circuit can then comprise a selection switch for selecting between power supply from the voltage conversion circuit or power supply from the battery terminal.

The invention can be used in a burst mode transmitter, or a burst mode transceiver. In one implementation, the charge storage device is sized to reach a steady state charge in one burst mode.

In another aspect, the invention provides a method of controlling power amplifier circuitry, comprising:

using a linear voltage regulator which includes a dissipative component to provide a voltage drop from a fixed voltage supply thereby to derive a regulated supply voltage for supply to a power amplifier;
connecting a charge storage device in a first circuit in series with the dissipative component during operation of the power amplifier such that the charge storage device is charged while the voltage across the dissipative component is correspondingly reduced; and
coupling the charge storage device to a second circuit when the power amplifier is not operated.

An example of the invention will now be described with reference to the accompanying drawings, in which:

Figure 1 shows one example of transceiver circuit of the invention;
Figure 2 shows an efficiency calculation; and
Figure 3 shows the efficiency improvement graphically.

The invention provides an arrangement of linear voltage regulator that allows a significant improvement to the global efficiency of a switched power amplifier and control function, for example in an RF transmitter. The solution is particularly useful for battery operated small RF power amplifiers operating in a burst mode like in Zigbee or ISM transmitters.

The invention is based on a modification to the linear regulator. The required voltage drop between the battery voltage and the power amplifier is implemented partly in a dissipative device (a PMOS transistor for example) and partly in a reactive one (a capacitor for example).

The charge stored in the capacitor at the end of the burst can be used either to feed the power amplifier itself in the next burst(s) or to feed a receiver the next time it is used.

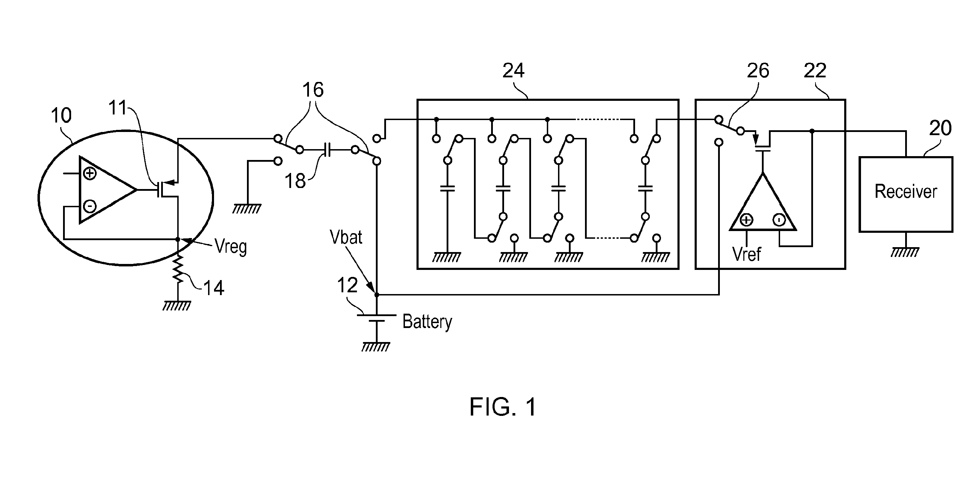

Figure 1 shows the invention applied to a burst mode transceiver circuit.

The circuit comprises a linear regulator circuit 10 which includes a dissipative element 11 for creating a voltage drop between a supply battery 12 and the power amplifier. The battery has a supply terminal at Vbat, and the circuit is designed to provide a regulated voltage Vreg to a terminal of a power amplifier, which in turn supplies a transmitter unit.

The power amplifier and its associated load of a transmitter circuit is shown schematically as a resistive load 14 and the dissipative element 11 is shown as a PMOS transistor. The resistive load thus represents a transmission function of an RF amplifier/transmitter.

The linear regulator 10 generates an output voltage Vreg to be applied to the RF power amplifier 14 to enable an RF transmission. The power amplifier operates in a burst mode, so that transmission takes places in bursts. A switch arrangement 16 is operated synchronously with the burst timing. One such burst is provided by the switch configuration shown, in which the battery 12 is coupled to the RF power amplifier 14 through a capacitor 18 and the dissipative element 11, which are in series between the battery terminal and the power supply terminal.

The forward voltage drop across the PMOS transistor depends on the level of charge of the capacitor. The voltage level is regulated by the linear regulator 10, so that if the capacitor is initially discharged, there is a voltage drop across the PMOS transistor of Vbat-Vreg. As the capacitor is charged, the linear regulator maintains the voltage Vreg constant, and when the capacitor is fully charged to Vreg-Vbat, there will be no voltage drop across the PMOS transistor.

The burst mode operation involves switching between the transmission mode and a reception mode. The reception mode makes use of a receiver circuit 20 which is supplied by a power management unit (PMU) and regulator 22.

In one implementation, the invention involves making use of the energy stored in the capacitor 18 during a transmission burst in a subsequent reception mode. However, the energy can instead be used for charging the battery, so that it may be re-used in subsequent transmission bursts.

One or several capacitors may be used to accommodate the best the reception and transmission sequencing. The switching operation is performed in synchronism with the burst switching and thus does not create any spurious switching noise.

If the capacitor 18 is sized to be completely charged (to Vbat-Vreg) by the current I drawn by the amplifier over the duration T of the burst mode, then the energy used in the power amplifier for each burst is given by:

$$E1 = Vreg.I.T.$$

The energy stored in the capacitor, with linear charging (because a constant current can be assumed to be drawn by the power amplifier during the burst transmission mode) from 0V to Vbat-Vreg is given by:

$$E2 = (Vbat\text{-}Vreg)/2.I.T$$

During the burst mode, Vreg is constant, Vbat is constant, the voltage across the capacitor increases linearly, and the voltage across the PMOS transistor decreases linearly (and they sum to Vbat-Vreg).

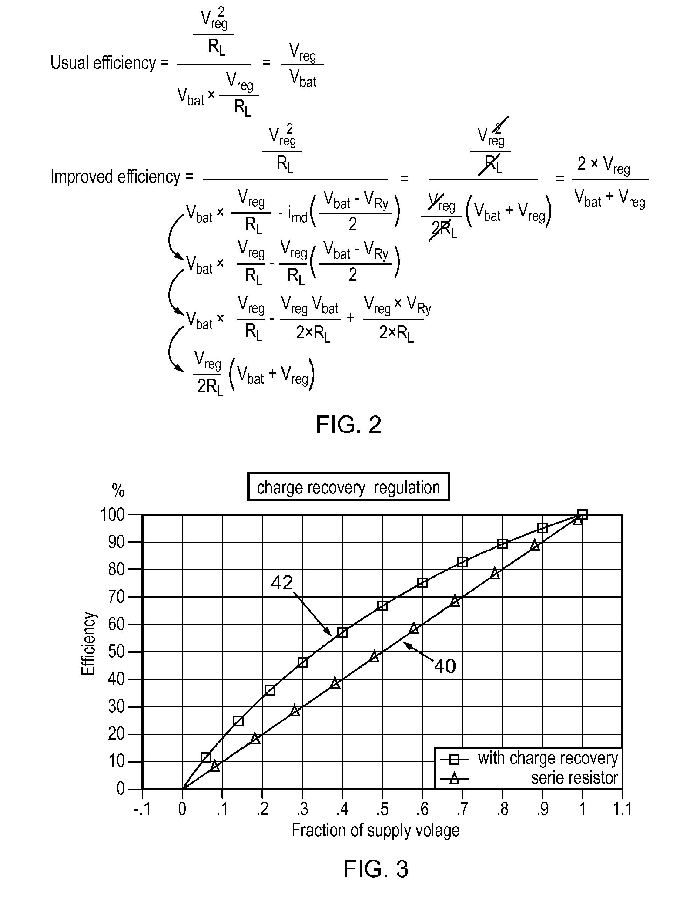

Figure 2 shows the efficiency calculation for the conventional use of a linear regulator and for the use of the invention. These calculations assume that the condition of full capacitor charge at the end of the burst period is satisfied.

The efficiency is dependent on the level of the desired voltage Vreg compared to the battery voltage Vbat. The efficiency changes from Vreg/Vbat to 2Vreg/(Vbat + Vreg).

Thus, in this mode of operation with one single charge/discharge cycle per RF burst, then if the regulated output voltage is one half of the battery voltage, the efficiency of the regulator can be improved from 50% to 67%.

Figure 3 shows the efficiency improvement based on the regulated voltage level as a function of the battery voltage. Plot 40 is the efficiency of the basic arrangement and plot 42 is the efficiency with the charge recovery.

The charge stored on the battery will be at a voltage level Vbat-Vreg. This is not likely to be sufficient to drive other circuit components. However, the energy can be used in various ways between the transmission burst modes.

In the example of Figure 1, a switched capacitor voltage multiplier 24 is used to derive a voltage suitable for driving the receiver 20.

The switching operations of the multiplier 24 are timed synchronously with the transmit/receive switching to avoid interference during transmission or reception.

A switch 26 determines whether the battery is used as the power source for the receiver or the energy from the voltage multiplier 24. Thus, the energy stored in the battery 18 can essentially be used for powering other devices such as the receiver section, thereby reducing the reliance on the battery 12.

The available voltage stored in the various capacitors of the voltage multiplier block 24 can be monitored (by a voltage comparator) or alternatively the successive phases of charge realized during transmission bursts may be counted and when a sufficient voltage "count" is reached the stored energy can be used. Thus, the switching performed by switch 26 is carried out in an intelligent manner.

In both cases an intelligent sequencer or state machine needs to be involved for the management of this block. This function can be implemented in the digital part of the transceiver power management unit (PMU).

Instead of using the stored energy in the receiving mode of operation (between the burst transmission modes), the energy can be supped to a charging circuit for charging the battery.

The stored charge is preferably used after each transmission burst, in order to obtain the greatest efficiency savings. However, this is not essential. It is also not essential that the capacitor is fully charged (to Vbat-Vreg) after each burst. It may take multiple transmission bursts to charge the capacitor.

As outlined above, the preferred use of the circuit of the invention is for burst mode transceivers. However, the invention can be applied to voltage controlled transmitters generally.

The example of using the energy for battery charging can be applied generally, and is not limited to transceiver applications.

The capacitor 18 is used to store charge. A battery could be used for this purpose.

The invention can be used in any circuit where a linear regulator is used for intermittently supplying a certain part and where a certain inactive period or a period dedicated to another phase of operation gives the opportunity to use the stored charge. The invention provides spurious free operation, which gives particular advantages in radio applications that, in general, are sensitive to fast switching.

The invention can be applied to a system having a quasi-continuous mode of operation where only very short periods of inactivity exist. In that case, the capacitor 18 and its associated switches 16 could be duplicated and the charge stored in one capacitor could be used while the other is being charged, and vice versa.

The invention does not require any modification to the switch mode power amplifier, the transmitter circuit or the receiver circuit, and for this reason these components have not been described in detail.

By way of example, the switch mode power amplifier can be class E, F, or inverse F. All types of switch mode amplifier which are controllable by their voltage supply can be used. Applications involving non switch mode RF power amplifiers (i.e. linear amplifiers) may also benefit from this invention as soon as their voltage is regulated and/or modulated in order for example to improve their efficiency. This type of amplifier can be class A, AB, B, etc.

The type of amplifiers to which the invention may be applied can for example be used in cellular phones (such as GSM or DCS) or any ISM transceivers (as in Remote Keyless Entry for cars) or in Zigbee or Bluetooth transmitters.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage. Any reference signs in the claims should not be construed as limiting the scope.

**Claims**

1. Power amplifier circuitry comprising:

   a power amplifier (14);
   a linear voltage regulator (10) which includes a dissipative component (11) for providing a voltage drop;
   a charge storage device (18) in series with the dissipative component, the series connection being between a fixed voltage supply terminal (Vbat) and a voltage supply terminal (Vreg) of the power amplifier (14); and
   a switching arrangement (16) for connecting the charge storage device (18) in a first circuit in series with the dissipative component (11) during operation of the power amplifier and for coupling the charge storage device (18) to a second circuit (20;24) when the power amplifier is not operated.

2. Circuitry as claimed in claim 1, comprising a transmitter unit controlled by the power amplifier and wherein the second circuit comprises a receiver unit (20).

3. Circuitry as claimed in claim 2, wherein the second circuit comprises a voltage conversion circuit (24).

4. Circuitry as claimed in claim 3, wherein the second circuit comprises a selection switch (26) for selecting between power supply from the voltage conversion circuit (24) or power supply from the battery terminal (Vbat).

5. Circuitry as claimed in any preceding claim, wherein the fixed voltage supply terminal comprises a battery terminal, and the circuitry further comprises the battery (12) coupled between the battery terminal and ground.

6. Circuitry as claimed in any preceding claim, wherein the power amplifier (14) comprises a switch mode amplifier.

7. Circuitry as claimed in any preceding claim comprising a burst mode transmitter unit.

8. Circuitry as claimed in claim 7, wherein the charge storage device (16) is sized to reach a steady state charge in one burst mode of the transmitter unit.

9. A transceiver comprising the circuitry as claimed in any preceding claim including a transmitter unit, and the second circuit, which second circuit comprises a receiver unit.

10. A method of controlling power amplifier circuitry, comprising:

   using a linear voltage regulator which includes a dissipative component (11) to provide a voltage drop from a fixed voltage supply (12) thereby to derive a regulated supply voltage (Vreg) for supply to a power amplifier;
   connecting a charge storage device (18) in a first circuit in series with the dissipative component during operation of the power amplifier such that the charge storage device is charged while the voltage across the dissipative component (11) is correspondingly reduced; and
   coupling the charge storage device (18) to a second circuit (24) when the power amplifier is not operated.

11. A method as claimed in claim 10, comprising controlling a transmitter using the power amplifier, and wherein the second circuit comprises a receiver unit (20).

12. A method as claimed in claim 11, comprising applying a voltage conversion to the voltage on the charge storage element.

13. A method as claimed in claim 12, wherein the fixed voltage supply terminal (Vbat) comprises a battery terminal and the method comprises selecting between power supply to the second circuit from the voltage conversion circuit (24) or power supply from the battery terminal (Vbat).

14. A method as claimed in any one of claims 10 to 13 comprising a operating a burst mode transmitter unit.

15. A method as claimed in claim 14, comprising charging the charge storage device to reach a steady state charge in one burst mode of the transmitter unit.

FIG. 1

EP 2 744 092 A1

$$\text{Usual efficiency} = \frac{\dfrac{V_{reg}^{2}}{R_L}}{V_{bat} \times \dfrac{V_{reg}}{R_L}} = \frac{V_{reg}}{V_{bat}}$$

$$\text{Improved efficiency} = \frac{\dfrac{V_{reg}^{2}}{R_L}}{V_{bat} \times \dfrac{V_{reg}}{R_L} - i_{md}\left(\dfrac{V_{bat} - V_{Ry}}{2}\right)} = \frac{\dfrac{V_{reg}^{\not{2}}}{\not{R_L}}}{\dfrac{\not{V}_{reg}}{2\not{R}_L}\left(V_{bat} + V_{reg}\right)} = \frac{2 \times V_{reg}}{V_{bat} + V_{reg}}$$

$$V_{bat} \times \frac{V_{reg}}{R_L} - \frac{V_{reg}}{R_L}\left(\frac{V_{bat} - V_{Ry}}{2}\right)$$

$$V_{bat} \times \frac{V_{reg}}{R_L} - \frac{V_{reg}\, V_{bat}}{2 \times R_L} + \frac{V_{reg} \times V_{Ry}}{2 \times R_L}$$

$$\frac{V_{reg}}{2R_L}\left(V_{bat} + V_{reg}\right)$$

## FIG. 2

## FIG. 3

Europäisches
Patentamt
European
Patent Office
Office européen
des brevets

**EUROPEAN SEARCH REPORT**

Application Number

EP 12 29 0445

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/156369 A1 (KULARATNA NIHAL [NZ] ET AL) 24 June 2010 (2010-06-24) <br> * abstract; figures 3,6b * <br> * paragraphs [0002] - [0004], [0008] - [0010], [0020] - [0022], [0032] - [0034] * <br> ----- | 1-15 | INV. <br> H02M3/07 <br> G05F1/563 <br> G05F1/63 <br> H04B1/16 |
| X | KOSALA KANKANAMGE ET AL: "Implementation aspects of a new linear regulator topology based on low frequency supercapacitor circulation", <br> APPLIED POWER ELECTRONICS CONFERENCE AND EXPOSITION (APEC), 2012 TWENTY-SEVENTH ANNUAL IEEE, IEEE, <br> 5 February 2012 (2012-02-05), pages 2340-2344, XP032127993, <br> DOI: 10.1109/APEC.2012.6166149 <br> ISBN: 978-1-4577-1215-9 <br> * abstract; figure 1; table 1 * <br> * Sections I, II, IV * <br> ----- | 1-15 | |
| X | NIHAL KULARATNA ET AL: "A low frequency supercapacitor circulation technique to improve the efficiency of linear regulators based on LDO ICs", <br> APPLIED POWER ELECTRONICS CONFERENCE AND EXPOSITION (APEC), 2011 TWENTY-SIXTH ANNUAL IEEE, IEEE, <br> 6 March 2011 (2011-03-06), pages 1161-1165, XP032014024, <br> DOI: 10.1109/APEC.2011.5744740 <br> ISBN: 978-1-4244-8084-5 <br> * abstract; figures 1-5 * <br> * Sections II, III * <br> ----- <br> -/-- | 1-15 | TECHNICAL FIELDS SEARCHED (IPC) <br><br> H02M <br> G05F <br> H04B |

The present search report has been drawn up for all claims

| Place of search | Date of completion of the search | Examiner |
|---|---|---|
| The Hague | 17 May 2013 | Kail, Maximilian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

| | Europäisches Patentamt European Patent Office Office européen des brevets | **EUROPEAN SEARCH REPORT** | Application Number EP 12 29 0445 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NIHAL KULARATNA ET AL: "Very low frequency supercapacitor techniques to improve the end-to-end efficiency of DC-DC converters based on commercial off the shelf LDOs", IECON 2010 - 36TH ANNUAL CONFERENCE ON IEEE INDUSTRIAL ELECTRONICS SOCIETY, IEEE, PISCATAWAY, NJ, USA, 7 November 2010 (2010-11-07), pages 721-726, XP031840145, ISBN: 978-1-4244-5225-5 * abstract; figures 1,2,3,4,6 * * Section I * | 1-15 | |
| A | US 2008/161073 A1 (PARK JOONBAE [KR] ET AL) 3 July 2008 (2008-07-03) * abstract; figures 1-3b * * paragraphs [0002], [0006], [0008], [0009], [0024], [0025], [0029], [0030], [0031] * | 1-15 | |
| | | | TECHNICAL FIELDS SEARCHED (IPC) |

The present search report has been drawn up for all claims

| Place of search | Date of completion of the search | Examiner |
|---|---|---|
| The Hague | 17 May 2013 | Kail, Maximilian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 12 29 0445

This annex lists the patent family members relating to the patent documents cited in the above-mentioned European search report.
The members are as contained in the European Patent Office EDP file on
The European Patent Office is in no way liable for these particulars which are merely given for the purpose of information.

17-05-2013

| Patent document cited in search report | | Publication date | Patent family member(s) | | Publication date |
|---|---|---|---|---|---|
| US 2010156369 | A1 | 24-06-2010 | EP<br>US<br>WO | 2368313 A1<br>2010156369 A1<br>2010071456 A1 | 28-09-2011<br>24-06-2010<br>24-06-2010 |
| US 2008161073 | A1 | 03-07-2008 | TW<br>US<br>WO | 200830531 A<br>2008161073 A1<br>2008127268 A2 | 16-07-2008<br>03-07-2008<br>23-10-2008 |

EPO FORM P0459

For more details about this annex : see Official Journal of the European Patent Office, No. 12/82